(19) Europäisches Patentamt
European Patent Office
Office européen des brevets

(11) Veröffentlichungsnummer: **0 158 074 B1**

(12) **EUROPÄISCHE PATENTSCHRIFT**

(45) Veröffentlichungstag der Patentschrift: **28.06.89**

(51) Int. Cl.$^4$: **A 01 N 43/80**, C 07 C 87/00, C 07 D295/02, C 07 C101/04

(21) Anmeldenummer: **85102043.8**

(22) Anmeldetag: **25.02.85**

# (54) Mikrobizide Mittel.

(30) Priorität: **08.03.84 DE 3408538**
**22.08.84 DE 3430805**

(43) Veröffentlichungstag der Anmeldung: **16.10.85 Patentblatt 85/42**

(45) Bekanntmachung des Hinweises auf die Patenterteilung: **28.06.89 Patentblatt 89/26**

(84) Benannte Vertragsstaaten: **AT BE CH DE FR GB IT LI NL**

(56) Entgegenhaltungen:
**US-A- 3 325 475**
**US-A- 4 291 045**
**CHEMICAL ABSTRACTS, Band 80, Nr. 15, 15. April 1974, Seite 83, Zusammenfassung Nr. 79144h, Columbus, Ohio, US; & JP - A - 73 22 629 (KUMIAI CHEMICAL INDUSTRY CO. LTD.) 23.03.1973**
**CHEMICAL ABSTRACTS, Band 79, Nr. 19, 12. November 1973, Seite 86, Zusammenfassung Nr. 112382p, Columbus, Ohio, US; & JP - A - 73 22 624 (KUMIAI CHEMICAL INDUSTRY CO., LTD.) 23.03.1973 (Cat. D)**
**CHEMICAL ABSTRACTS, Band 79, Nr. 13, 1. Oktober 1973, Seite 159, Zusammenfassung Nr. 74918h, Columbus, Ohio, US; & JP - A - 73 22 628 (KUMIAI CHEMICAL INDUSTRY CO., LTD.) 23.03.1973**
**CHEMICAL ABSTRACTS, Band 80, Nr. 3, 21. Januar 1974, Seite 104, Zusammenfassung Nr. 11212y, Columbus, Ohio, US; & JP - A - 73 08 933 (KUMIAI CHEMICAL INDUSTRY CO., LTD.) 03.02.1973**
**CHEMICAL ABSTRACTS, Band 79, Nr. 13, 1. Oktober 1973, Seite 161, Zusammenfassung Nr. 74938q, Columbus, Ohio, US; & JP - A - 73 22 625 (KUMIAI CHEMICAL INDUSTRY CC., LTD.) 23.03.1973**

(73) Patentinhaber: **BAYER AG**
**D-5090 Leverkusen 1 Bayerwerk (DE)**

(72) Erfinder: **Salzburg, Herbert, Dr.**
**Hahnenweg 1**
**D-5000 Köln 80 (DE)**
Erfinder: **Hajek, Manfred, Dr.**
**Hahnenweg 3**
**D-5000 Köln 80 (DE)**
Erfinder: **Hänssler, Gerd, Dr.**
**Heymannstrasse 40**
**D-5090 Leverkusen (DE)**
Erfinder: **Kuck, Karl-Heinz, Dr.**
**Heerstrasse 24**
**D-4018 Langenfeld (DE)**

**EP 0 158 074 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

CHEMICAL ABSTRACTS, Band 82, Nr. 17, 28. April 1975, Seite 141, Zusammenfassung Nr. 107525v, Columbus, Ohio, US; & JP - A - 74 117 627 (MIKASA CHEMICAL INDUSTRIAL CO. LTD.) 11.11.1974

CHEMICAL ABSTRACTS, Band 79, Nr. 15, 15. Oktober 1973, Seite 105, Zusammenfassung Nr. 88317y, Columbus, Ohio, US; & JP - A - 73 33 026 (KUMIAI CHEMICAL INDUSTRY CO., LTD.) 07.05.1973

CENTRAL PATENTS INDEX, BASIC ABSTRACTS JOURNAL, Sektion C, AGDOC, Woche T12, März 1972, Zusammenfassung 19817T/12, Londen, GB;

CHEMICAL ABSTRACTS, Band 79, Nr. 21, 26. November 1973, Seite 86, Zusammenfassung Nr. 122557p, Columbus, Ohio, US; & JP - A - 73 05 936 (KUMIAI CHEMICAL INDUSTRY CO., LTD.) 25.01.1973

## Beschreibung

Die vorliegende Erfindung betrifft die Verwendung von bekannten Salzen des 3-Keto-2H, 3H-1,2-benzisothiazol-1,1-dioxids als Mikrobizide, vor allem als Fungizide und Bakterizide, im Pflanzenschutz.

Die Verwendung der Salze des 3-Keto-2H, 3H-1,2-benzisothiazol-1,1-dioxids als Süßstoffe, z. B. das Monoethanolamin-Salz, ist bereits bekannt (vgl. z. B. US-PS 3 325 475).

Weiterhin sind 3-Alkenyloxy-1,2-benzisothiazol-1,1-dioxide, wie z. B. das 3-Allyloxy-1,2-benzisothiazol-1,1-dioxid, bekannt, ebenso wie ihre Wirkung auf dem Pflanzenschutzgebiet, vor allem als Reisfungizide (vgl. Jap. Pat. 7 014 301 ; C.A. 73 : 45 500 m).

Die Wirkung dieser Stoffe kann jedoch unter gewissen Bedingungen in einigen Anwendungsbereichen nicht immer völlig befriedigend sein.

Weiterhin sind gegebenenfalls ein- oder zweifach durch Methyl substituierte Pyridin-Salze bzw. das 2-Methylpiperidin-Salz bekannt, die fungizide Eigenschaften haben (vgl. Jp 40-022620 und Jp 73-22,629).

Weiterhin sind Ammoniumverbindungen des 3-Keto-2H, 3H-1,2-benzisothiazol-1,1-dioxids, wie die Ammonium-, Dimethyl-alkyl-benzyl-ammonium- und Hydroxyethylammonium-Verbindungen, als auch Salze bekannt. Sie sind vielseitig anwendbar, so als Desinfektionsmittel, als Fungizide oder Bakterizide auf dem Pflanzenschutzsektor (vgl. US-PS 3 280 137, Jp. 52 105-216, JP 4 8022-624 und Jp 72 09428).

Es wurde die Verwendung der z. B. als Süßstoffe bekannten Salze des 3-Keto-2H, 3H-1,2-benzisothiazol-1,1-dioxids der Formel (I)

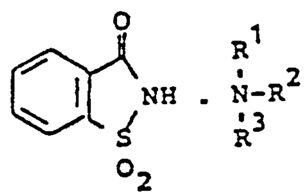

(I)

in welcher

$R^1$ für Wasserstoff, für Methyl, Ethyl, n- und iso-Propyl, n-, sec.-, tert.- und iso-Butyl, Neopentyl, iso-Octyl, Dodecyl, Tetradecyl und Stearyl, für 2-Aminoethyl, für Carboxymethyl, 2-Carboxyethyl und 1-Carboxyethyl, für Phenyl, 3-Nitrophenyl, 4-Nitrophenyl, 3-Chlorphenyl, 4-Chlorphenyl, 3,4-Dichlorphenyl und 2,6-Dichlorphenyl, für Cyclopentyl, Cyclohexyl oder für den Pyridin-, Pyrimidin-, 4-Methylpyrimidin-, 1,2,4-Triazol-, 1,2,3-Triazol-, Tetrahydropyran- und Tetrahydroxypyranrest steht, oder

$R^2$ für Alkyl mit 1 bis 18 Kohlenstoffatomen, für gegebenenfalls 1- bis 3-fach durch Hydroxy und/oder 1- bis 3-fach durch Amino substituiertes Alkyl mit 1 bis 6 Kohlenstoffatomen, für durch Carboxy substituiertes Alkyl mit 1 bis 4 Kohlenstoffatomen, für gegebenenfalls ein- bis dreifach, gleich oder verschieden durch Nitro und Chlor substituiertes Phenyl, für Cycloalkyl mit 5 oder 6 Kohlenstoffatomen, für gegebenenfalls ein- bis vierfach durch Alkyl mit 1 bis 4 Kohlenstoffatomen oder Hydroxy substituierte, gegebenenfalls gesättigte oder ungesättigte Heterocyclen mit 1 bis 3 gleichen oder verschiedenen Heteroatomen, wie Stickstoff und Sauerstoff, und insgesamt mit 5 oder 6 Ringgliedern steht, oder

$R^1$ und $R^2$ gemeinsam mit dem Stickstoffatom, an dem sie stehen, den Morpholin-, Imidazol-, 2-Methylimidazol-, Pyrazol-, Imidazolidin-, 2-iso-Propyl-3-methyl-imidazolidin-, Piperidin-, Piperazinyl-, 1-Methylpiperazinyl-, 2,2,6,6-Tetramethylpiperidin-, 2,2,6,6-Tetramethyl-4-keto-piperidin-, Tetrahydrooxazol-, Tetrahydro-2-isopropyl-oxazol- und Pyrrolrest bilden, und

$R^3$ für Wasserstoff, für Methyl, Ethyl, n- und iso-Propyl, n-, sec-, tert.- und iso-Butyl, Pentyl und Hexyl, für Amino, für Benzyl und für

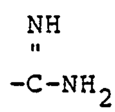

steht,
ausgenommen das Dimethyl-monoethanolaminsalz, das Monoethanolaminsalz und das Ethylenaminsalz des Saccharins, zur Bekämpfung von Mikroben gefunden.

Die erfindungsgemäße Verwendung der Salze des 3-Keto-2H, 3H-1,2-benzisothiazol-dioxids stellt somit eine Bereicherung der Technik dar.

Die erfindungsgemäß zu verwendenden Salze des 3-Keto-2H, 3H-1,2-benzisothiazol-1,1-dioxids sind durch die Formel (I) allgemein definiert.

Als Beispiele für die Aminkomponente seien beispielhaft genannt :

Methylamin, Diethylamin, Triethylamin, Methylethylamin, Isopropylamin, Neopentylamin, Stearylamin, Cyclopentylamin, Cyclohexylamin, 2-Aminopyridin, 3-Amino-1,2,4-triazol, Morpholin, Piperidin, Piperazin, Imidazol, Pyrazol, Imidazolin, 2-Isopropylimidazolin, N-Methylpiperazin, Triethylendiamin,

2,2,6,6-Tetramethylpiperidin-4-on, 1-Hydroxy-methyl-amin, 2-Amino-2-desoxyglucose, Glucosylamin, Trishydroxyethylamin oder Guanidin.

Sind in einer der Aminkomponenten mehrere Aminofunktionen enthalten, so können sowohl Monoals auch Di- oder Polysaccharinate isoliert werden.

Zu den als Aminkomponente einzusetzenden Stoffen gehören auch die sogenannten blockierten Amine, die in wäßrigen oder alkoholischem Medium in Amin und Blockierungskomponente zerfallen. Beispiele hierfür sind N-Trimethylsilylmorpholin, Piperidin-N-carbonsäuretriazolid, Methyl-(4-nitrophenyloxycarbonyl)-amin. Demgemäß sind die üblichen hydrolysierbaren Blockierungsgruppen wie Imidazolylcarbonyl, Pyrazolylcarbonyl- oder Triazolylcarbonyl-, Phenoxycarbonyl- oder 4-Nitrophenoxycarbonyl-, Trialkylsilyl geeignet für Amine.

Die erfindungsgemäß zu verwendenden Salze des 3-Keto-2H, 3H-1,2-benzisothiazol-1,1-dioxids der Formel (I) sind bekannt. Man erhält sie z. B., wenn man 3-Keto-2H, 3H-1,2-benzisothiazol-1,1-dioxid der Formel (II)

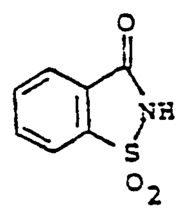

(II)

mit Aminen der Formel (III)

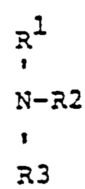

(III)

in welcher $R^1$ bis $R^3$ die oben angegebene Bedeutung haben, gegebenenfalls in Gegenwart eines geeigneten Lösungsmittels, wie beispielsweise Wasser, Alkohole oder Dimethylformamid, bei erhöhten Temperaturen, insbesondere zwischen, 40 °C und 70 °C vermischt [vgl. z. B. Jap. 13 076 (1965) ; Jap. 15 634 (1963) ; US-Pat. 3 325 475].

Die Salze sind auch in Abwesenheit von Lösungsmitteln durch Verrühren, Verschmelzen oder bei gasförmigen Amin-Komponenten durch Begasung herstellbar.

In einer besonderen Ausführungsform bei Einsatz der blockierten Amine, müssen Lösungsmittel, wie Wasser oder Alkohole, als Reaktionspartner anwesend sein.

Die erfindungsgemäß verwendbaren Wirkstoffe weisen eine starke mikrobizide Wirkung auf und können zur Bekämpfung von unerwünschten Mikroorganismen praktisch eingesetzt werden. Die Wirkstoffe sind für den Gebrauch als Pflanzenschutzmittel geeignet, insbesondere als Fungizide und Bakterizide.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Bakterizide Mittel werden im Pflanzenschutz zur Bekämpfung von Pseudomonadaceae, Rhizobiaceae, Enterobacteriaceae, Corynebacteriaceae und Streptomycetaceae eingesetzt.

Beispielhaft aber nicht begrenzend seien einige Erreger von pilzlichen und bakteriellen Erkrankungen, die unter die oben aufgezählten Oberbegriffe fallen, genannt :

Botrytis-Arten, wie beispielsweise Botrytis cinerea ;
Plasmopara-Arten, wie beispielsweise Plasmopara viticola,
Uromyces-Arten, wie beispielsweise Uromyces appendiculatus,
Sphaerotheca-Arten, wie beispielsweise Sphaerotheca fuliginea,
Venturia-Arten, wie beispielsweise Venturia inaequalis,
Podosphaera-Arten, wie beispielsweise Podosphaera leucotricha,
Phytophthora-Arten, wie beispielsweise Phytophthora infestans,
Erysiphe-Arten, wie beispielsweise Erysiphe graminis,
Puccinia-Arten, wie beispielsweise Puccinia redondita,
Fusarium-Arten, wie beispielsweise Fusarium culmorum,
Ustilago-Arten, wie beispielsweise Ustilago nuda oder avenae,
Septoria-Arten, wie beispielsweise Septoria nodorum,
Tilletia-Arten, wie beispielsweise Tilletia caries,
Xanthomonas-Arten, wie beispielsweise Xanthomonas oryzae,
Pseudomonas-Arten, wie beispielsweise xanthomonas lachrymans,

Erwinia-Arten, wie beispielsweise Erwinia amylovora,
Pyricularia-Arten, wie beispielsweise Pyricularia oryzae,
Pellicularia-Arten, wie beispielsweise Pellicularia sasakii,
Pyrenophora-Arten, wie beispielsweise Pyrenophora teres (Konidienform : Drechslera, Syn : Helminthosporium),
Leptosphaeria-Arten, wie beispielsweise Leptosphaeria nodorum,
Cochliobolus-Arten, wie beispielsweise Cochliobolus sativus,
(Konidienform : Drechslera, Syn : Helminthosporium) und Cercospora-Arten, wie beispielsweise Cercospora canescens.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäß verwendbaren Wirkstoffe können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage : Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgase, wie Halogenkohlenwasserstoffe sowie Butan, Propan, Stickstoff und Kohlendioxid. Als feste Trägerstoffe kommen in Frage : z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage : z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage : z. B. nichtionogene und anionische Emulgatoren, wie Polyoxyethylen-Fettsäureester, Polyoxyethylen-Fettalkoholether, z. B. Alkylarylpolyglycol-ether, Alkylsulfonate, Alkylsulfate, Arylsulfonate sowie Eiweißhydrolysate. Als Dispergiermittel kommen in Frage : z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z. B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäß verwendbaren Wirkstoffe können in den Formulierungen in Mischung mit anderen bekannten Wirkstoffen vorliegen, wie Fungizide, Insektizide, Akarizide und Selektiv-Herbizide, sowie in Mischungen mit Düngemitteln und Wachstumsregulatoren.

Die erfindungsgemäß verwendbaren Wirkstoffe können als solche, in Form ihrer Formulierungen oder den daraus bereiteten Anwendungsformen, wie gebrauchsfertige Lösungen, emulgierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z. B. durch Gießen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behandlung des Bodens sind Wirkstoffkonzentrationen von 0,00001 bis 0,1 Gew.-%, vorzugsweise von 0,0001 bis 0,02 %, am Wirkungsort erforderlich.

Besonders hervorzuheben ist die gute Wirkung gegen die den Feuerbrand erzeugenden Erreger Erwinia amylovora; mit guten Erfolgt werden sie auch zur Bekämpfung von Reiskrankheiten, wie beispielsweise den Erreger der Reisfleckenkrankheit (Pyricularia oryzae) oder den Erreger der Bakteriose an Reis (Xanthomonas oryzae) eingesetzt. Weiterhin ist die gute Wirkung bei der Bekämpfung von Getreidekrankheiten, verursacht zum Beispiel durch Cochliobolus sativus oder Pyrenophora teres, hervorzuheben.

## Anwendungsbeispiele

Als Vergleichssubstanzen werden die folgenden Verbindungen herangezogen:

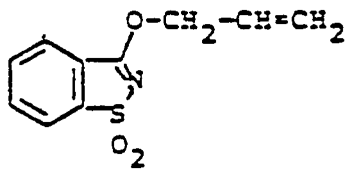

und 3 × $Cu(OH)_2 \cdot CuCl_2$ oder

$Cu_2(OH)_3Cl$ (B)

## Beispiel A

Pyricularia-Test (Reis)/protektiv

Lösungsmittel: 12,5 Gewichtsteile Aceton
Emulgator : 0,3 Gewichtsteile Alkylarylpolyglykolether

Zur Herstellung einer zweckmäßigen Wirkstoffzubereitung vermischt man 1 Gewichtsteil Wirkstoff mit der angegebenen Menge Lösungsmittel und verdünnt das Konzentrat mit Wasser und der angegebenen Menge Emulgator auf die gewünschte Konzentration.

Zur Prüfung auf protektive Wirksamkeit bespritzt man junge Reispflanzen mit der Wirkstoffzubereitung bis zur Tropfnässe. Nach dem Abtrocknen des Spritzbelages werden die Pflanzen mit einer wäßrigen Sporensuspension von Pyricularia oryzae inokuliert. Anschließend werden die Pflanzen in einem Gewächshaus bei 100 % rel. Luftfeuchtigkeit und 25 °C aufgestellt.

4 Tage nach der Inokulation erfolgt die Auswertung des Krankheitsbefalls.

Eine deutliche Überlegenheit in der Wirksamkeit gegenüber dem Stand der Technik zeigen in diesem Test z. B. die Verbindungen gemäß folgender Beispiele:

### Tabelle A

Pyricularia-Test (Reis)/protektiv

| Wirkstoffe | Wirkstoffkonzentration in % | Krankheitsbefall in % der unbehandelten Kontrolle |
|---|---|---|
| 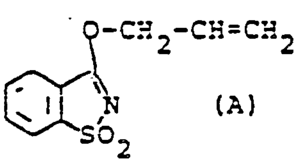 (A) (bekannt) | 0,025 | 25 |
| 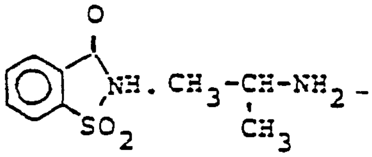 | 0,025 | 0 |

(Fortsetzung)

Pyricularia-Test (Reis)/protektiv

| Wirkstoffe | Wirkstoffkonzentration in % | Krankheitsbefall in % der unbehandelten Kontrolle |
|---|---|---|
| 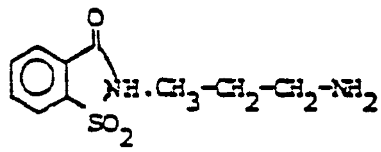 | 0,025 | 10 |
| 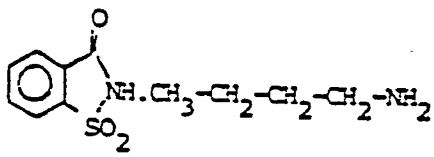 | 0,025 | 10 |
| 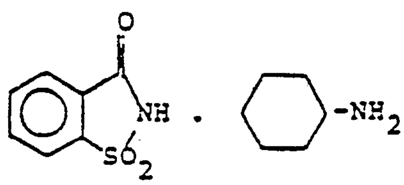 | 0,025 | 0 |
| 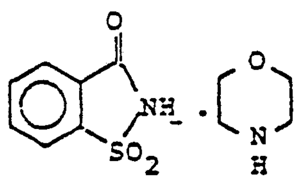 | 0,025 | 10 |
| 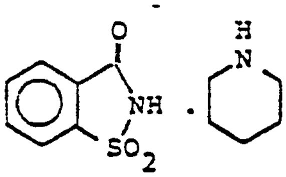 | 0,025 | 10 |
| 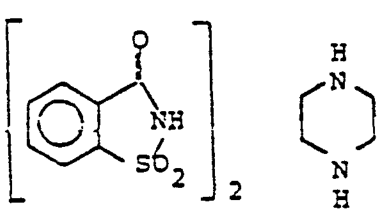 | 0,025 | 10 |
| 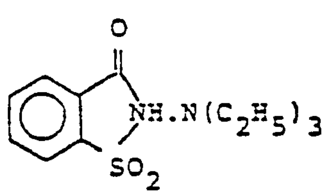 | 0,025 | 10 |

(Fortsetzung)

Pyricularia-Test (Reis)/protektiv

| Wirkstoffe | Wirkstoffkonzentration in % | Krankheitsbefall in % der unbehandelten Kontrolle |
|---|---|---|
| 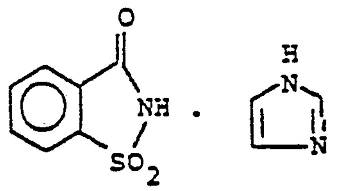 | 0,025 | 0 |
| 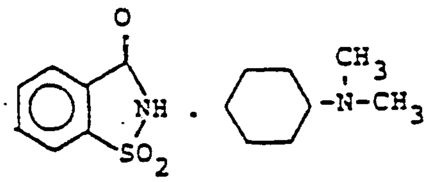 | 0,025 | 10 |
| 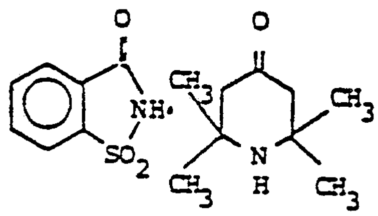 | 0,025 | 0 |
| 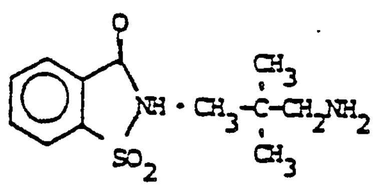 | 0,025 | 10 |
| 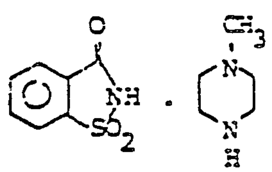 | 0,025 | 10 |
| 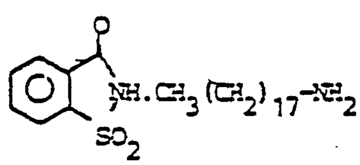 | 0,025 | 10 |
| 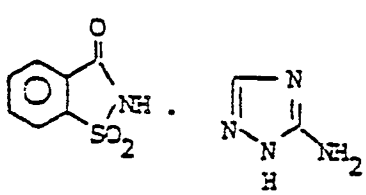 | 0,025 | 20 |

Beispiel B

Pyricularia-Test (Reis)/systemisch

Lösungsmittel : 12,5 Gewichtsteile Aceton
Emulgator : 0,3 Gewichtsteile Alkylarylpolyglykolether

Zur Herstellung einer zweckmäßigen Wirkstoffzubereitung vermischt man 1 Gewichtsteil Wirkstoff mit der angegebenen Menge Lösungsmittel und verdünnt das Konzentrat mit Wasser und der angegebenen Menge Emulgator auf die gewünschte Konzentration.

Zur Prüfung auf systemische Eigenschaften werden 40 ml der Wirkstoffzubereitung auf Einheitserde gegossen, in der junge Reispflanzen angezogen wurden. 7 Tage nach der Behandlung werden die Pflanzen mit einer wäßrigen Sporensuspension von Pyricularia oryzae inokuliert. Danach verbleiben die Pflanzen in einem Gewächshaus bei einer Temperatur von 25 °C und einer rel. Luftfeuchtigkeit von 100 % bis zur Auswertung.

4 Tage nach der Inokulation erfolgt die Auswertung des Krankheitsbefalls.

Eine deutliche Überlegenheit in der Wirksamkeit gegenüber dem Stand der Technik zeigen in diesem Test z. B. die Verbindungen gemäß folgender Beispiele :

Tabelle B

Pyricularia-Test (Reis)/systemisch

| Wirkstoffe | Aufwandmenge in mg Wirkstoff pro 100 $cm^2$ | Krankheitsbefall in % der unbehandelten Kontrolle |
|---|---|---|
| 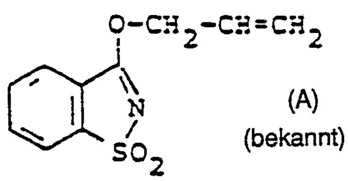 (A) (bekannt) | 100 | 50 |
| 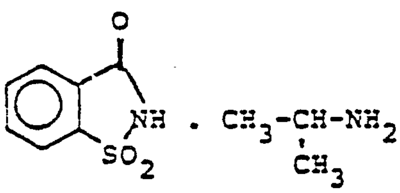 | 100 | 30 |
| 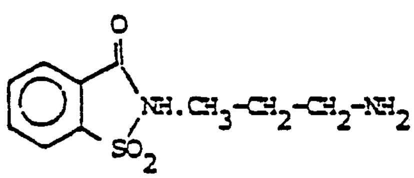 | 100 | 10 |
| 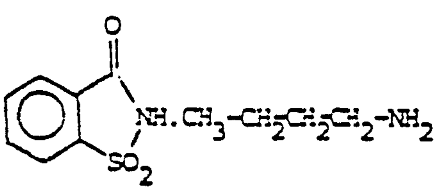 | 100 | 22 |

(Fortsetzung)

Pyricularia-Test (Reis)/systemisch

| Wirkstoffe | Aufwandmenge in mg Wirkstoff pro 100 cm² | Krankheitsbefall in % der unbehandelten Kontrolle |
|---|---|---|
| 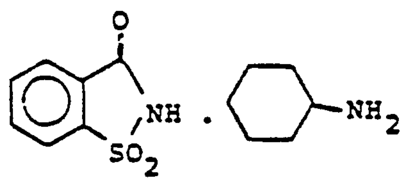 | 100 | 30 |
| 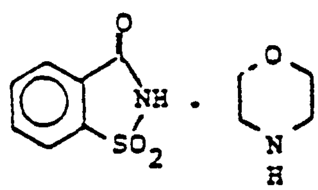 | 100 | 20 |
| 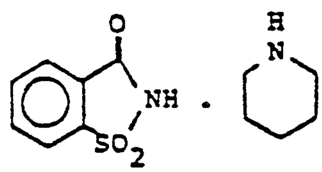 | 100 | 20 |
| 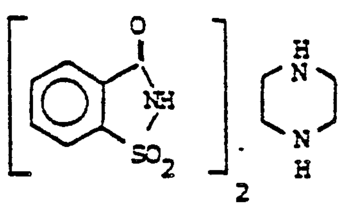 | 100 | 20 |
| 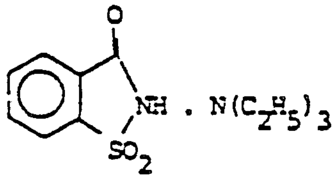 | 100 | 20 |
| 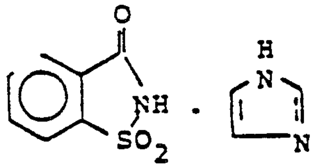 | 100 | 0 |
| 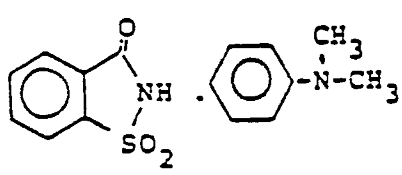 | 100 | 20 |

(Fortsetzung)

Pyricularia-Test (Reis) / systemisch

| Wirkstoffe | Aufwandmenge in mg Wirkstoff pro 100 $cm^2$ | Krankheitsbefall in % der unbehandelten Kontrolle |
|---|---|---|
| 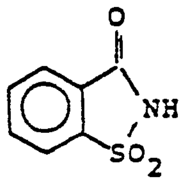 . 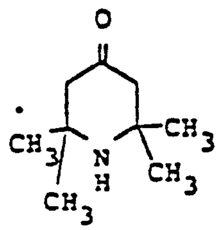 | 100 | 10 |
| 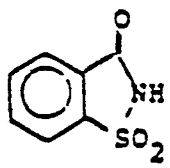 . 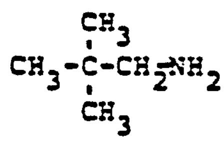 | 100 | 20 |
| 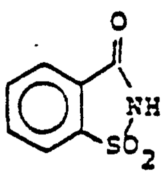 . 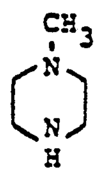 | 100 | 20 |
| 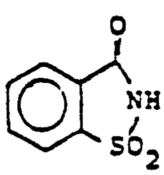 . $CH_3-(CH_2)_{17}-NH_2$ | 100 | 20 |
| 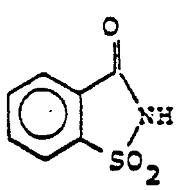 . 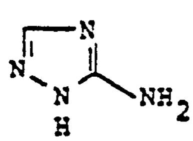 | 100 | 0 |

Beispiel C

Erwinia amylovora-Test/Bakteriose/Apfel
systemisch

Lösungsmittel : 49 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung aus systemische Eigenschaften wird die Wirkstoffzubereitung auf Einheitserde gegossen, in der junge Pflanzen angezogen wurden. 3 Tage nach der Behandlung werden die Pflanzen durch

Übersprühen mit einer wäßrigen Suspension von Erwinia amylovora inokuliert. Nach einer 48-stündigen Inkubation bei 100 % rel. Luftfeuchtigkeit verbleiben die Pflanzen 8 Tage bis zur Auswertung in einer Klimakammer bei 24 °C und 70-80 % rel. Luftfeuchtigkeit.

Eine deutliche Überlegenheit in der Wirksamkeit gegenüber dem Stand der Technik zeigen in diesem Test z. B. die Verbindungen gemäß folgender Beispiele :

Tabelle C

Erwinia amylovora-Test/Bakteriose/Apfel
systemisch

| Wirkstoffe | Aufwandmenge in mg Wirkstoff pro 100 $cm^2$ | Krankheitsbefall in % der unbehandelten Kontrolle |
|---|---|---|
| $3\ Cu(OH)_2 \cdot CuCl_2$ oder $Cu_2(OH)_3Cl$ (B) (bekannt) | 10 | 80 |
| 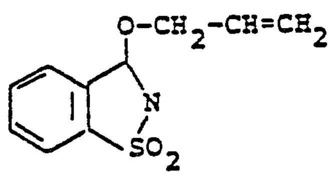 (A) (bekannt) | 10 | 50 |
| 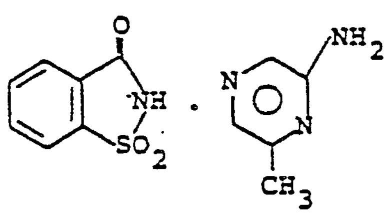 | 10 | 15 |
| 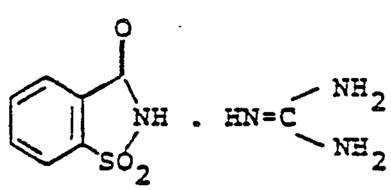 | 10 | 10 |

## Beispiel D

Erwinia amylovora-Test/Bakteriose/Apfel
protektiv

Lösungsmittel : 49 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach dem Antrocknen des Spritzbelages werden die Pflanzen durch Übersprühen mit einer wäßrigen Suspension von Erwinia amylovora inokuliert. Nach einer 48-stündigen Inkubation bei 100 % rel. Luftfeuchtigkeit verbleiben die Pflanzen 8 Tage bis zur Auswertung in einer Klimakammer bei 24 °C und 70-80 °C rel. Luftfeuchtigkeit.

Eine deutliche Überlegenheit in der Wirksamkeit gegenüber dem Stand der Technik zeigten in diesem Test z. B. die Verbindungen gemäß dem folgenden Beispielen :

Tabelle D

Erwinia amylovora-Test/Bakteriose/Apfel
protektiv

| Wirkstoffe | Wirkstoffkonzentration in % | Krankheitsbefall in % der unbehandelten Kontrolle |
|---|---|---|
| 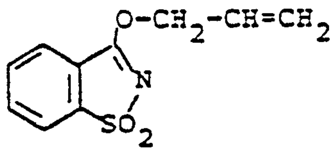 (A) (bekannt) | 0,025 | 70 |
| 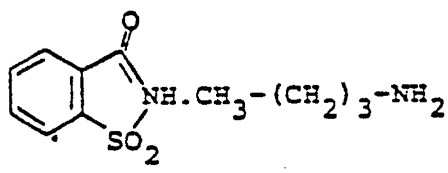 | 0,025 | 20 |

Herstellungsbeispiele

Die folgenden Beispiele sollen die Erfindung weiter erläutern.

Beispiel 1

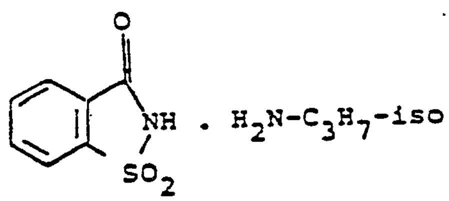

183 g (1 Mol) 3-Keto-2H, 3H-1,2-benzisothiazol-1,1-dioxid werden mit 59 g Isopropylamin (gasförmig) oder einer 59 g Isopropylamin enthaltenden wäßrigen Lösung in 200 ml n-Butanol auf 60 °C erhitzt. Nach 10 Min. werden die Lösungsmittel destillativ entfernt und man erhält 242 g des Salzes als Öl (100 % der Theorie).

Beispiel 2

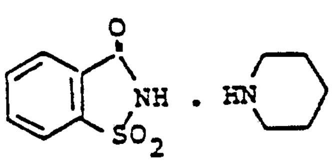

183 g (1 Mol) 3-Keto-2H, 3H-1,2-benzisothiazol-1,1-dioxid und 86 g (1 Mol) Piperidin werden in einem heizbaren Zwangsmischer bei 50 °C so lange vermischt, bis eine Probe im IR-Spektrum die Verschiebung der $SO_2$-Bande auf unter 1 400 $cm^{-1}$ zeigt (1 350-1 380). Das Produkt fällt als Öl an (268 g, 100 % der Theorie).

Beispiel 3

183 g (1 Mol) 3-Keto-2H, 3H-1,2-benzisothiazol-1,1-dioxid und 219 g (3 Mol) n-Butylamin werden unter Rühren auf 60 °C erhitzt. Nach 10 Minuten wird der Überschuß an Butylamin (146 g) abdestilliert, wobei das Salz als farbloser Feststoff vom Schmp. 88 °C zurückbleibt (256 g, 100 % der Theorie).

Analog den vorbeschriebenen Beispielen können die Verbindungen der Formel

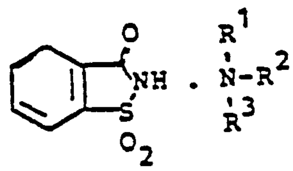 (I)

hergestellt werden, worin die Aminkomponente die folgenden Amine sind :

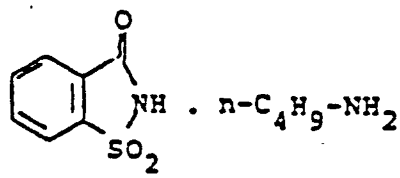

| Beispiel Nr. | 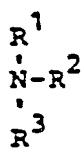 | Schmelzpunkt [°C] der Endverbindung der Formel (I) |
|---|---|---|
| 4 | 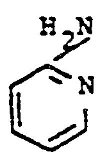 | 215 |
| 5 | 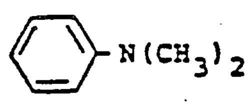 | 130 |
| 6 | 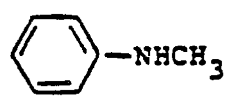 | 81 |
| 7 | 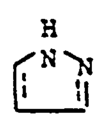 | 235 |
| 8 | 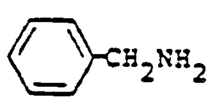 | 81 |

(Fortsetzung)

| Beispiel Nr. | 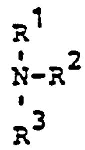 | Schmelzpunkt [°C] der Endverbindung der Formel (I) |
|---|---|---|
| 9 | 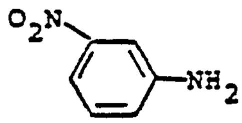 | 192 |
| 10 | 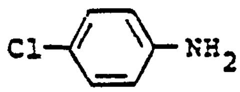 | 178 |
| 11 | 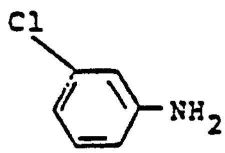 | 165 |
| 12 | 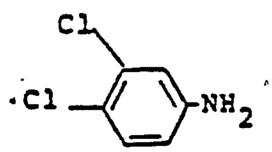 | 192 |
| 13 | 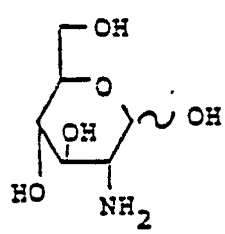 | Öl |
| 14 | 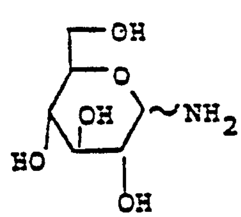 | Öl |
| 15 | 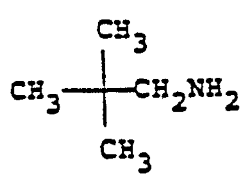 | 90 |

(Fortsetzung)

| Beispiel Nr. | $R^1$<br>N-$R^2$<br>$R^3$ | Schmelzpunkt [°C] der Endverbindung der Formel (I) |
|---|---|---|
| 16 | 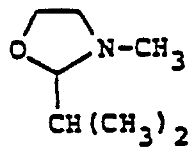 | Öl |
| 17 | 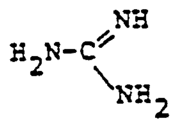 | 210 |
| 18 | $CH_3NH_2$ | 157 |
| 19 | $C_2H_5NH_2$ | 148 |
| 20 | $n-C_3H_7NH_2$ | 137 |
| 21 | $i-C_3H_7-NH_2$ | Öl |
| 22 | $n-C_4H_9NH_2$ | 88 |
| 23 | $(C_2H_5)_3N$ | Öl |
| 24 | $CH_3-(CH_2)_{11}NH_2$ | Öl |
| 25 | $CH_3-(CH_2)_{17}NH_2$ | Öl |
| 26 | 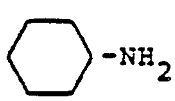 | 186 |
| 27 | 1/2 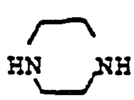 | 249 |
| 28 | 1 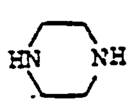 | 248 |
| 29 | 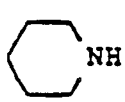 | Öl |

(Fortsetzung)

| Beispiel Nr. | $R^1$<br>$N-R^2$<br>$R^3$ | Schmelzpunkt /°C/ der Endverbindung der Formel (I) |
|---|---|---|
| 30 | 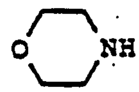 | Öl |
| 31 | 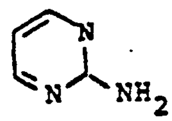 | 235 |
| 32 | 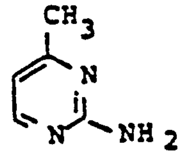 | 225 |
| 33 | 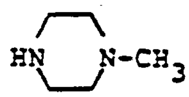 | 161 |
| 34 | 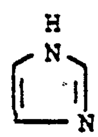 | 182 |
| 35 | 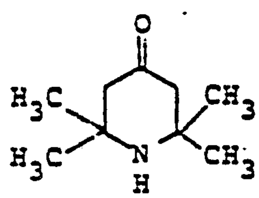 | 147 |
| 36 | 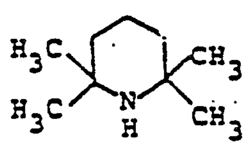 | 121 |
| 37 | 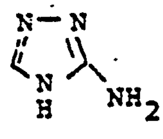 | 190 |
| 38 | $H_2N-CH_2COONa$ | 240 |
| 39 | $CH_3-CH(NH_2)-COONa$ D, L | 201 |
| 40 | $H_2N-CH_2CH_2COONa$ | 186 |

**Patentanspruch**

Verwendung von einem Salz des 3-Keto-2H, 3H-1,2-benzisothiazol-1,1-dioxids der Formel (I)

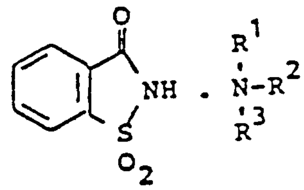

(I)

in welcher

$R^1$ für Wasserstoff, für Methyl, Ethyl, n- und iso-Propyl, n-, sec.-, tert.- und iso-Butyl, Neopentyl, iso-Octyl, Dodecyl, Tetradecyl und Stearyl, für 2-Aminoethyl, für Carboxymethyl, 2-Carboxyethyl und 1-Carboxyethyl, für Phenyl, 3-Nitrophenyl, 4-Nitrophenyl, 3-Chlorphenyl, 4-Chlorphenyl, 3,4-Dichlorphenyl und 2,6-Dichlorphenyl, für Cyclopentyl, Cyclohexyl oder für den Pyridin-, Pyrimidin-, 4-Methylpyrimidin-, 1,2,4-Triazol-, 1,2,3-Triazol-, Tetrahydropyran- und Tetrahydroxypyranrest steht, oder

$R^2$ für Alkyl mit 1 bis 18 Kohlenstoffatomen, für gegebenenfalls 1- bis 3-fach durch Hydroxy und/oder 1- bis 3-fach durch Amino substituiertes Alkyl mit 1 bis 6 Kohlenstoffatomen, für durch Carboxy substituiertes Alkyl mit 1 bis 4 Kohlenstoffatomen, für gegebenenfalls ein- bis dreifach, gleich oder verschieden durch Nitro und Chlor substituiertes Phenyl, für Cycloalkyl mit 5 oder 6 Kohlenstoffatomen, für gegebenenfalls ein- bis vierfach durch Alkyl mit 1 bis 4 Kohlenstoffatomen oder Hydroxy substituierte, gegebenenfalls gesättigte oder ungesättigte Heterocyclen mit 1 bis 3 gleichen oder verschiedenen Heteroatomen und insgesamt mit 5 oder 6 Ringgliedern steht, oder

$R^1$ und $R^2$ gemeinsam mit dem Stickstoffatom, an dem sie stehen, den Morpholin-, Imidazol-, 2-Methylimidazol-, Pyrazol-, Imidazolidin-, 2-iso-Propyl-3-methyl-imidazolidin-, Piperidin-, Piperazinyl-, 1-Methylpiperazinyl-, 2,2,6,6-Tetramethylpiperidin-, 2,2,6,6-Tetramethyl-4-keto-piperidin-, Tetrahydrooxazol-, Tetrahydro-2-isopropyloxazol- und Pyrrolrest bilden, und

$R^3$ für Wasserstoff, für Methyl, Ethyl, n- und iso-Propyl, n-, sec.-, tert.- und iso-Butyl, Pentyl und Hexyl, für Amino, für Benzyl und für

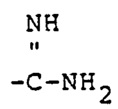

steht,
ausgenommen das Dimethylmonoethanolaminsalz, das Monoethanolaminsalz und das Ethylendiaminsalz des Saccharins, zur Bekämpfung von Mikroben im Pflanzenschutz.

**Claim**

Use of a salt of the 3-keto-2H, 3H-1,2-benzoisothiazole, 1,1-dioxide of the formula (I)

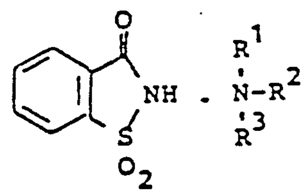

(I)

in which

$R^1$ represents hydrogen, methyl, ethyl, n- and iso-propyl, n-, sec., tert.- and iso-butyl, neopentyl, isooctyl, dodecyl, tetradecyl and stearyl, represents 2-aminoethyl, represents carboxymethyl, 2-carboxyethyl and 1-carboxyethyl, represents phenyl, 3-nitrophenyl, 4-nitrophenyl, 3-chlorophenyl, 4-chlorophenyl, 3,4-dichlorophenyl and 2,6-dichlorophenyl, or represents cyclopentyl or cyclohexyl, or represents the pyridine, pyrimidine, 4-methylpyrimidine, 1,2,4-triazole, 1,2,3-triazole, tetrahydropyran and tetrahydroxypyran radicals, or

$R^2$ represents alkyl having 1 to 18 carbon atoms, represents alkyl which has 1 to 6 carbon atoms and which is optionally monosubstituted to trisubstituted by hydroxyl and/or monosubstituted to trisubstituted by amino, or represents alkyl which has 1 to 4 carbon atoms and which is substituted by carboxyl, or represents phenyl which is optionally monosubstituted to trisubstituted by identical or different substituents from amongst nitro and chlorine, or represents cycloalkyl having 5 or 6 carbon atoms or

represents saturated or unsaturated heterocycles which have 1 to 3 identical or different hetero atoms and a total of 5 or 6 ring members and which are optionally monosubstituted to tetra substituted by alkyl having 1 to 4 carbon atoms or by hydroxyl, or

$R^1$ and $R^2$, together with the nitrogen atom at which they are located, form the morpholine, imidazole, 2-methylimidazole, pyrazole, imidazolidine, 2-iso-propyl-3-methyl-imidazolidine, piperidine, piperazinyl, 1-methylpiperazinyl, 2,2,6,6-tetramethylpiperidine, 2,2,6,6-tetramethyl-4-keto-piperidine, tetrahydrooxazole, tetrahydro-2-isopropyloxazole and pyrrole radicals, and

$R^3$ represents hydrogen, represents methyl, ethyl, n- and iso-propyl, n-, sec-, tert.- and iso-butyl, pentyl and hexyl, represents amino, represents benzyl and represents

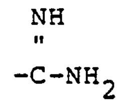

with the exception of the dimethylmonoethanolamine salt, the monoethanolamine salt and the ethylenediamine salt of saccharin, can be used for combating microbes in plant protection.

## Revendication

Utilisation d'un sel du 3-céto-2H,3H-1,2-benzoisothiazole-1,1-dioxyde de formule (I)

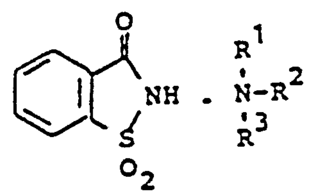

(I)

dans laquelle

$R^1$ représente l'hydrogène, les restes méthyle, éthyle, n- et isopropyles, n-, sec-, tert- et isobutyles, néopentyle, isooctyle, dodécyle, tétradécyle et stéaryle, le reste 2-aminoéthyle, les restes carboxyméthyle, 2-carboxyéthyle et 1-carboxyéthyle, les restes phényle, 3-nitrophényle, 4-nitrophényle, 3-chlorophényle, 4-chlorophényle, 3,4-dichlorophényle et 2,6-dichlorophényle, les restes cyclopentyle, cyclohexyle ou les restes pyridine, pyrimidine, 4-méthylpyrimidine, 1,2,4-triazole, 1,2,3-triazole, tétrahydropyranne et tétrahydroxypyranne, ou bien

$R^2$ représente un reste alkyle en $C_1$-$C_{18}$, un reste alkyle en $C_1$-$C_6$ éventuellement substitué 1 à 3 fois par hydroxy et/ou 1 à 3 fois par amino, un reste alkyle en $C_1$-$C_4$ substitué par carboxy, un reste phényle éventuellement substitué 1 à 3 fois, de manière identique ou différente, par le groupe nitro et le chlore, un reste cycloalkyle en $C_5$ ou $C_6$, des hétérocycles éventuellement saturés ou insaturés, ayant 1 à 3 hétéroatomes identiques ou différents et au total 5 ou 6 chaînons, éventuellement substitués 1 à 4 fois par alkyle en $C_1$-$C_4$ ou hydroxy, ou bien

$R^1$ et $R^2$ pris ensemble avec l'atome d'azote auquel ils sont liés, forment le reste morpholine, le reste imidazole, le reste 2-méthylimidazole, le reste pyrazole, le reste imidazolidine, le reste 2-isopropyl-3-méthylimidazolidine, le reste pipéridine, le reste pipérazinyle, le reste 1-méthylpipérazinyle, le reste 2,2,6,6-tétraméthylpipéridine, le reste 2,2,6,6-tétraméthyl-4-céto-pipéridine, le reste tétrahydrooxazole, le reste tétrahydro-2-isopropyloxazole et le reste pyrrole, et

$R^3$ représente l'hydrogène, les restes méthyle, éthyle, n- et isopropyles, n-, sec-, tert- et isobutyles, pentyle et hexyle, le reste amino, le reste benzyle et le reste

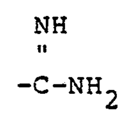

à l'exception du sel de diméthylmonoéthanolamine, du sel de monoéthanolamine et du sel d'éthylènediamine de la saccharine, pour la lutte contre les microbes dans la protection des plantes.